(19) Europäisches Patentamt
European Patent Office
Office européen des brevets

(11) **EP 4 421 539 B1**

(12) **EUROPEAN PATENT SPECIFICATION**

(45) Date of publication and mention
of the grant of the patent:
**22.04.2026 Bulletin 2026/17**

(21) Application number: 23158220.6

(22) Date of filing: **23.02.2023**

(51) International Patent Classification (IPC):
***G01V 7/00*** *(2006.01)*

(52) Cooperative Patent Classification (CPC):
**G01V 7/00**

(54) **METHOD AND APPARATUS FOR DETECTING A DYNAMICAL CHANGE IN A GRAVITATIONAL FIELD**

VERFAHREN UND VORRICHTUNG ZUR DETEKTION EINER DYNAMISCHEN ÄNDERUNG IN EINEM GRAVITATIONSFELD

PROCÉDÉ ET APPAREIL DE DÉTECTION D'UN CHANGEMENT DYNAMIQUE DANS UN CHAMP GRAVITATIONNEL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**28.08.2024 Bulletin 2024/35**

(73) Proprietor: **Forschungszentrum Jülich GmbH 52425 Jülich (DE)**

(72) Inventor: **Bruschi, David Edward 66111 Saarbrücken (DE)**

(74) Representative: **Leinweber & Zimmermann Patentanwalts-PartG mbB European Patent Attorneys Viktualienmarkt 8 80331 München (DE)**

(56) References cited:
• **ANANDAN ET AL: "Detection of gravitational radiation using superconducting circuits", PHYSICS LETTERS A, NORTH-HOLLAND PUBLISHING CO., AMSTERDAM, NL, vol. 110, no. 9, 19 August 1985 (1985-08-19), pages 446 - 450, XP024660354, ISSN: 0375-9601, [retrieved on 19850819], DOI: 10.1016/0375-9601(85)90551-1**

• **GULIAN ARMEN ET AL: "Rotational Superconducting Gravitational Wave Detectors Based on Cooper-Pair Electronic Transducers", IEEE TRANSACTIONS ON APPLIED SUPERCONDUCTIVITY, IEEE, USA, vol. 29, no. 5, 1 August 2019 (2019-08-01), pages 1 - 5, XP011715917, ISSN: 1051-8223, [retrieved on 20190318], DOI: 10.1109/TASC.2019.2899324**

• **CHIAO R Y: "Figure "8" gravitational-wave antenna using a superconducting-core coaxial cable: Continuity equation and its superluminal consequences", ARXIV.ORG, CORNELL UNIVERSITY LIBRARY, 201 OLIN LIBRARY CORNELL UNIVERSITY ITHACA, NY 14853, 5 November 2010 (2010-11-05), XP080460765**

## Description

The invention relates to a method and an apparatus for detecting a dynamical change in a gravitational field.

## State of the prior art

Detecting and measuring gravitational fields is a centuries-long endeavour of greatest importance. The famous experiments by Henry Cavendish just before the end of the Eighteenth Century attempted to use specifically designed setups to measure relevant gravitational parameters. In the aforementioned experiments by Cavendish, a first attempt to measure the force of gravity between two masses, and consequently Newton's constant, were made. Since then, scientific progress has repeatedly changed the concrete methodology for exploring the strength and the dynamics of gravitational fields, as well as it has provided means to exploiting gravity for a variety of different purposes.

Gravimetry and gradiometry are two of the most striking applications of our ability to measure gravitational fields [1]. They have now countless applications, that range from concrete implementations for oil exploration, gas and mineral exploration, seismology, autonomous navigation and sensing [1, 2] to tests of fundamental theories of Nature [3] and detection of gravitational waves [4-6]. The almost complete set of current and available technologies rely on a test mass as core element of the measuring device that is subject to the effects of gravity.

The state of the art in these fields lists the development and commercialization of many devices. Characterization and listing of such devices have already been attempted, as argued and shown in Chapter 1.3 *Classification of existing gravity gradiometers* of [1] and Section *PROSPECTIVE GRAVITY GRADIOMETERS* of [7]. In particular, the information is detailed in Tables 1.1 and 1.2 at pages 1-31 and 1-32 respectively of [1], and in Table 2 at page 75 in [7]. The category of gradiometers considered in [1] is that of cryogenic instruments (i.e., instruments cooled in order to reduce sources of noise), and they are classified according to the functioning principles: torsional, accelerometric, gravimetric. Note that no matter which specific implementation is chosen, in the overwhelming majority of the cases one or more (reference) masses are necessary in order to perform the measurement. This can be either a classical solid object [1, 7], an individual atom (see page 74 in [7]) or a cloud of cold atoms [2, 8, 9].

Particular emphasis should be given to the fact that many solutions can be classical, in the sense of being based on classical objects whose position is monitored very accurately. Recently, the rise of quantum technologies, together with the improvement of the experimental control on quantum systems, has opened the door to new possibilities for the detection of gravitational fields, and its many applications. In these cases, pioneering proposals exploit clouds of cold atoms that are continuously monitored in the position degree of freedom [8], superconducting circuits [3], and cold atoms that are employed within atom interferometric setups [9, 10].

As noted in [1], "all measurements can be classified as *absolute, relative* and those that *can be calibrated in absolute units"*. A brief list of the technologies and their classification in these terms is presented in Table 1.4 on page 35 of [1]. A crucial aspect is that relative instruments require dynamical changes in the quantity of interest in order to measure its absolute value. In normal mode of operation, where the quantity does not change, they can only measure a relative change between two points in space, hence the name.

Precision in measurements varies between a few dozen eotvos•$Hz^{-1/2}$ and a fraction of one eotvos•$Hz^{-1/2}$ (after the famous scientist Baron Lorand von Eötvös, 1 Eo=1 eotvos=1 x $10^{-9}s^{-2}$).

Anandan et al. "Detection of gravitational radiation using superconducting circuits", Physics Letters A, vol. 110, no. 9, 446-450 consider the effect of a non-stationary gravitational field on a superconducting circuit carrying a persistent current. By measuring the change in the current of the field in at least one solenoid, which is part of the superconducting circuit, a gravity wave can be detected in principle.

Gulian Armen et al. "Rotational Superconducting Gravitational Wave Detectors Based on Cooper-Pair Electronic Transducers", IEEE Transactions on Applied Superconductivity, vol. 29, no. 5, pages 1-5 use a ring with a quadrupolar mass distribution that experiences a non-zero torc due to the action of a gravitational field. To detect the resulting oscillations of the ring, a frame with a coil is rigidly attached to the ring that is placed in a magnetic field to thereby convert the rotation directly into an electric current.

Chiao et al. arXiv:1011.1325v1, 5 November 2010 predict the accumulation of positive and negative electrical charges in a superconducting loop in the shape of a Figure "8" under the influence of a gravitational wave.

## Disadvantages of the prior art

To date, technologies that detect gravitational fields and their gradient are either based on confined classical machines which contain a physical mass that is used as reference during the detection process [1, 7], they are based on large interferometers [6], or they require ultra-cold physical systems to operate in the quantum regime [1, 2, 9]. These technologies have already been listed above in Tables 1.1 and 1.2 at pages 1-31 and 1-32, respectively. Each type possesses its own disadvantages: in the case of the mass-based mechanical systems, there is the need of control over the motion and position of a physical massive object, which inherently presents all problems related to monitoring and stabilization of a physical system. In the case of the (laser) interferometer-based technologies, typically larger sizes than the mechanical ones are required. For example, LIGO is composed of 4km long arms and requires many people to operate [4]. Interferometers to be placed in space, such as LISA [11], are intrinsically very expensive and of no (at least short-to-middle future) commercial value.

We can additionally divide the gradiometers in two broad classes: those developed for static measurements, where the instrument is located at one place for the duration of the measurement, and those "intended for operation on moving carriers". It is evident that the latter class allows for a larger scope of applications, but also suffers from a larger plethora of sources of noise. Regardless of the type, it is clear that perhaps one of the major sources of noise is given by the fact that the physical systems that are used as core for the measurement (solid masses or clouds of cold atoms) need their motion to be probed to high accuracy [1]. In this sense, stabilization of the moving component of the gradiometer is a crucial aspect for the functioning of the device.

Detailed considerations regarding "gravity gradiometers intended for operation on moving carriers" are provided at pages 1-35 and 1-36 of [7], as well as in [1]. We briefly list (from the aforementioned references) what such issues are:

- background of considerable dynamic gradients of inertial forces at the gravity gradiometer position;
- ability to provide minimum of dynamic errors associated with the structural instabilities (e.g., harmonic self-oscillations) inherent to all cumbersome stable tables;
- ability to provide matching parameters (and keeping them stable over the whole operation interval) for accelero-metric (paired) gravity gradiometers;
- thermal stabilisation of all critical parts that constitute a gravity gradiometer;
- ability to provide ultra-sensitive and stable displacement measurements for torsional gravity gradiometers;
- ability to provide ultra-stable rotating platforms with a constant speed of rotation, for either accelerometric or torsional modulating (rotating) gravity gradiometers;
- ability to provide real-time data processing; ability to provide metrological equipment and calibration stations for moving-base gravity gradiometers.

Overall, these technologies have as only objective to measure, changes in the gravitational field, quantified by the gradient and therefore, as the difference in the quantity between two (close) points divided by the distance.

## SOLUTION OF THE INVENTION

The invention provides a method to convert local dynamical gravitational fields, such as those of an oscillating mass or a gravitational wave, into measurable electric currents induced within conducting wires.

According to a first aspect of the present invention, there is provided a method of detecting a dynamical change of a gravitational field, the method comprising: providing a predefined magnetic field; providing an electrical conductor loop so as to encircle a two-dimensional surface area with the magnetic field passing therethrough; detecting an electrical signal induced in the loop in response to a dynamical dimensional change of the surface area caused by a dynamical change of the gravitational field.

The expression "dynamical change" in particular includes a temporal change of the gravitational field at a location where the loop is kept stationary, or any other change caused by moving the loop in a spatially varying gravitational field, or both.

In one embodiment of the method, the magnetic field passing through the loop may be confined to a portion of the two-dimensional surface area so as to define a field-free gap between the boundaries of the two-dimensional surface area and the portion having the field confined thereto, respectively.

In another embodiment of the method, the loop may be of rectangular shape.

In yet another embodiment of the method, the field-free gap may be in the form of two rectangular zones, each of the zones sharing one side edge with one of two parallel side edges of the rectangular loop.

In one embodiment of the method, the magnetic field may be static.

In one embodiment of the method, the method may further comprise the step of moving the loop.

In yet another embodiment, the method may further comprise the step of establishing a mathematical expression for the induced electrical signal by relating the dynamical change of the two-dimensional surface area to the corresponding dynamical change of the metric tensor of the gravitational field according to gravitational theory, and by relating the induced electrical signal to the dynamical change of magnetic flux through the two-dimensional area caused by the dynamical change of the two-dimensional surface area according to Maxwell's theory of electromagnetism.

According to a second aspect of the present invention, there is provided an apparatus for detecting a dynamical change of a gravitational field, the apparatus comprising: means for providing a predefined magnetic field; an electrical conductor loop arranged to encircle a two-dimensional surface area with the magnetic field passing therethrough; means for detecting an electrical signal induced in the loop in response to a dynamical change of the two-dimensional surface area caused by a dynamical change of the gravitational field.

In one embodiment of the apparatus, the magnetic field passing through the loop may be confined to a portion of the two-dimensional surface area so as to define a field-free gap between the boundaries of the two-dimensional surface area and the portion having the field confined thereto, respectively.

In one embodiment of the apparatus, the loop may be of rectangular shape.

In yet another embodiment of the apparatus, the field-free gap may be in the form of two rectangular zones, each of the zones sharing one side edge with each one of two parallel side edges of the rectangular loop.

In one embodiment of the apparatus, the magnetic field may be static.

In still another embodiment of the apparatus, the conductor loop may be in the form of a coil having one or more turns of an electrically conductive wire.

In a further embodiment of the apparatus, the loop may have a structural stiffness so as to resist deformation by tidal forces of the gravitational field.

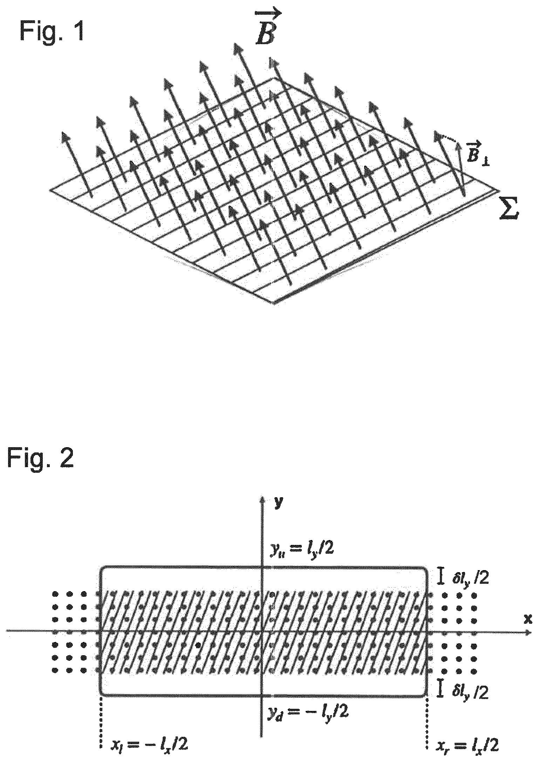

In this work we propose a completely novel solution to the problem of detecting dynamical changes of gravitational fields. Our work is based on the realization that the change of the curvature of spacetime can be used to effectively alter the magnetic flux through a closed loop, therefore inducing an electric current. This idea solves immediately the problem of requiring proof masses (be they compact objects or clouds of cold atoms) that move and whose motion must be monitored, controlled and stabilized. The closed loop may be a solenoid of conducting material immersed in a (not necessarily homogeneous) magnetic field, and no moving parts are required within the measuring device (for a simple illustration of the idea see Figure 1). If the background gravitational field changes, or if the device is placed altogether on a moving platform, the change in curvature within the area of the solenoid will induce a (small) electric current in the solenoid itself that can be detected and measured to infer the gravity gradient. This solution has the added advantage that the device is directly interfaced with an electric circuit, reducing the number of signal-transduction passages, and therefore sources of errors.

In the following, the principles underlying the invention and examples thereof are further explained with reference to the drawings in which:

Fig. 1    schematically shows magnetic flux through a plain surface area;

Fig. 2    schematically shows an exemplary embodiment of the invention comprising an electrically conducting loop and a magnetic field that partially fills an area bounded by the loop;

Fig. 3    schematically shows the measurement of an electrical signal induced in the loop;

Fig. 4    schematically shows the induced current caused by a dynamical change of a gravitational field as a function of time;

Fig. 5    shows the effect of an impinging gravitational wave; and

Fig. 6    schematically shows the effect of motion of the loop in a static gravitational field.

The technical solution provided below comes in the form of mathematical proof that physical laws allow for dynamical gravitational fields to be converted into electric signals using specifically designed setups consisting of magnetic fields and coils. Below we provide the steps of the formal proof of how this can be achieved.

It is well known from the standard theory of electromagnetism that the change of magnetic flux $\Phi_M$ of the magnetic field **B** through a surface $\Sigma$ induces an electric current in any conductor that bounds the surface. A depiction of a simple setup in flat spacetime can be found in Figure 1. Figure 1 shows the magnetic flux through a surface in a generic setup of a flat, rectangular surface $\Sigma$ (striped through) which is immersed in a constant magnetic field $\mathbf{B} = \vec{B}$. The component of the magnetic field that is perpendicular to the surface is denoted $\vec{B}_\perp$. Throughout this description we use interchangeably the bold font and the overhead arrow font for vectors according to readability.

In general, we define the flux $\Phi_M$ of the magnetic field **B** through a spacelike surface $\Sigma$ as

$$\Phi_{\mathrm{M}} := \int_\Sigma d\Sigma^j \, B_j,$$

$$(1)$$

where d$\Sigma^j$ is the oriented surface element (i.e., the vector normal to the surface at each point in space, whose magnitude is that of the infinitesimal volume area at the point) and $a_j b^j$ is a shorthand notation for $a_j b^j := \sum_{j=1}^{3} a_j b^j$ .

We know from Maxwell's theory of electromagnetism that in flat spacetime, and therefore to the perturbative order of interest here, the flux $\Phi_M$ through $\Sigma$ is related to the electric field $j_k^{\Phi}$ induced on the boundary $\partial_\Sigma$ of the surface through the relation

$$\frac{\partial \Phi_M}{\partial t} = -\oint_{\partial_\Sigma} dx^k \, j_k^{\Phi},$$

(2)

The two expressions (1) and (2) are the starting point of this work.

We are interested in integrating over a 2-dimensional (finite) surface $\Sigma$ with boundary $\partial_\Sigma$ that can be chosen arbitrarily in the most general scenario. Generalization to such arbitrary surfaces can be done in a straightforward fashion, but is not necessary in order to present the proposed technology here.

We are assuming that the spacetime is weakly curved and therefore the metric will have the perturbative expansion

$$g_{\mu\nu} = \eta_{\mu\nu} + \epsilon h_{\mu\nu}$$

(3)

where $\eta_{\mu\nu}$ = diag(-1, 1, 1, 1) is the flat Minkowski spacetime metric, $h_{\mu\nu} = h_{\mu\nu}(x^\rho)$ is the (dynamical) metric perturbation that depends on the spacetime coordinates $x^\rho$ and that will induce the effects at the basis of this proposal. Crucially, $\epsilon \ll 1$ is a small perturbative control parameter that maintains the gravitational perturbations weak, i.e., $|\epsilon h_{\mu\nu}| \ll 1$ for all spacetime points. Notice that the smallness of these perturbations is reasonable for all purposes since strongly curved spacetimes are expected only within extreme astrophysical scenarios that are completely out of the scope of this proposal.

Therefore, we choose for simplicity a "flat" surface (for example, a disc, rectangle or a square) and rotate our axis such that the surface lies on the constant z plane: this gives the oriented area element $d\Sigma^j = \sqrt{g_2} dx \, dy \, \hat{\mathbf{z}}$ . Here $g_2(t, x, y)$ is the determinant of the metric restricted to the $xy$ plane, and $\hat{\mathbf{z}}$ is the unit vector in the z direction. We write $\sqrt{g_2(t, x, y)} = 1 - \epsilon g_2^{(1)}(t, x, y) + O(\epsilon^2)$ . In general, we see that the element $d\Sigma^j$ can have first order contributions, which in general will depend on the components of the metric perturbation that are perpendicular to the surface of integration. We expect that this will be true also for more complicated surfaces.

*Setup*

We assume that, in the absence of the perturbation, there is a thin wire of conducting material that forms a rectangle of width $l_x$ along the x-axis, height $l_y$ along the y-axis, and area $A := l_x l_y$ that lies in the z = 0 plane. Perpendicular to this plane we have a constant magnetic field

$$B = B_0(\vartheta(y + (l_y/2 - \delta l_y/2)) - \vartheta(y - (l_y/2 - \delta l_y/2)))\, \hat{z}$$

(4)

pointing in the positive z direction within a strip of length to $l_0 \gg l_x$ and height $l_y - \delta l_y$, where $\vartheta(x)$ is the Heaviside theta function defined by $\vartheta(x) = 1$ for $x \geq 0$ and is zero otherwise. The gap $\delta l_y$ is an external arbitrary parameter that is key to this proposal and can be freely adjusted.

This gap plays a key role in the proposed technology. The technical consequences of its magnitude, as well as the dependence of the final effects on the variations of the magnitude, will be discussed later. Here, instead, we provide an intuitive understanding for its presence. The core idea of this proposal is to have a magnetic flux variation due to gravity. If the magnetic field initially permeates the whole area of the surface around which a conductor wire is present, then small deformations in one direction can induce flux variations that in principle are compensated for by those induced by small deformations in the orthogonal direction. This is the case, as we see later, of Example **EX2.** For this reason, although we do show that in general there can be induced currents to first order in $\varepsilon$ even when the magnetic field permeates the whole surface from the start (i.e., $\delta_y = 0$), we choose to introduce the gap of length $\delta_y$ to allow for a crucial degree of freedom that can be used to amplify an existing effect (such as that of Example **EX1),** or to allow it to manifest depending on the particular configuration (such as in the case of Example **EX2).** Regarding this latter case, we have not shown how in the case of Example **EX2** the effects do depend dramatically on the presence of the gap (as well as its size), but it is immediate to retrace the calculations and show that, if the magnetic field extends (infinitely) far in the x-direction, the presence of the gap in the y-direction crucially determines the size, or even the existence, of an induced current at first order in $\varepsilon$. It is also intuitive to see that, in light of what we have just said, the effect due to the presence of the gap is maximized when $\delta_y \geq \varepsilon$. This occurs because in such parameter regime the magnetic field is never "leaking out" in the y-direction, and therefore the only contribution in the flux change comes from the amount of field lines entering or exiting the surface in the x-direction. It is possible to retrace the mathematical steps to prove this assertion but we avoid providing a direct calculation in order not to overburden the proposal with mathematical details.

The configuration of the whole system is depicted in Figure 2 - note that in this case, the configuration corresponds to having set $\mathbf{B} = \mathbf{B}_\perp$ in Figure 1. In the setup configuration of Figure 2 the conducting coil is represented by the thick line, and its shape approximates a rectangle of height $l_y := y_d - y_u$ and width $l_x := x_r - x_l$. The magnetic field $\mathbf{B} = B_0\hat{\mathbf{z}}$ is non vanishing within the striped-through area, it is perpendicular to the plane and pointing outwards. There is an initial gap of length $\delta l_y/2$ on both ends in the y-direction between the top and bottom edges of the coil and the area where the magnetic field is present.

Crucially, the wire is assumed to resist all deformations that can arise due to gravitational tidal forces. This is a reasonable assumption for realistic materials in weakly curved spacetime [12]. In turn, this translates into fixing the proper length of each edge of the wire. We know that $L := \int_{x_i^\mu}^{x_f^\mu} \sqrt{ds^2}$ is the proper length between two points $x_i^\mu$ and $x_f^\mu$ in spacetime [13, 14], evaluated along a trajectory $x^\mu(\lambda)$ parametrized by $\lambda$, we compute $L_x := \int_{x_l}^{x_r} \sqrt{ds^2}\,\big|_{y=z=0}$ and $L_y := \int_{y_d}^{y_u} \sqrt{ds^2}\,\big|_{x=z=0}$ and at a constant given time $t$ for our particular case. This gives us

$$L_x(t) = l_x \left(1 + \epsilon \Lambda_{11}(t)\right),$$
$$L_y(t) = l_y \left(1 + \epsilon \Lambda_{22}(t)\right),$$

$$(5)$$

where we have defined the real and time-dependent functions

$$\Lambda_{11}(t) := \frac{1}{l_x} \int_{x_l}^{x_r} dx\, h_{11}(x^\rho)\big|_{y=z=0},$$
$$\Lambda_{22}(t) := \frac{1}{l_y} \int_{y_d}^{y_u} dy\, h_{22}(x^\rho)\big|_{x=z=0}.$$

$$(6)$$

Note that, in general, the proper lengths $L_x(t)$ and $L_y(t)$ will not coincide with the coordinate lengths $l_x$ and $l_y$. This occurs, for example, in the case of (asymptotically) flat spacetime, and it is a direct consequence of the (weak) curvature of spacetime. This mismatch is key to our proposal. We can therefore compute the *proper length* $P_* := 2(L_x + L_y)$ and the *proper area* $A := L_x L_y$ of the coil, which are constants in time since they are the quantities measured physically in the laboratory. Their effective values depend on the degree of rigidity of the coil itself, thus resisting tidal forces due to gravitational perturbations.

*Computation of the driving equations*

We now employ the main equations (1) and (2) to compute the current induced by the dynamical gravitational field. At this point we anticipate that, due to the rigidity of the wire, the time dependent deformation of spacetime within the area of the coil will change the flux of the magnetic field, thereby ultimately generating a current.

The crucial step we have to make is to define precisely the surface of interest. Since the wire of conducting material is infinitely rigid, this means that the integration region $\Sigma$ chosen to illustrate this proposal is defined by all points $P = (x, y, 0)$ such that $-L_x/2 \leq x \leq L_x/2$ and $-L_y/2 \leq y \leq L_y/2$. We have assumed that there is a gap in the area occupied initially by the magnetic field in the y-direction. In the perpendicular x-direction, the situation is different because the magnetic field extends beyond the boundary of the wire to a sufficient degree that we can assume that therefore any deformation in this direction becomes irrelevant.

We employ the main equations (1), (2) and (6), together with some careful algebra, and obtain

$$(7)$$

$$\begin{cases} \Phi_{\mathrm{M}}(t) = (1 - \Theta_{\mathrm{yy}}(t)\vartheta\left(\Theta_{\mathrm{yy}}(t)\right) - \epsilon\Gamma_{\mathrm{zz}}(t))\Phi_{\mathrm{M}}(0), \\ \partial_t \Phi_{\mathrm{M}} = -P_* J_\Phi(t). \end{cases}$$

where we have introduced

$$\Theta_{\mathrm{yy}}(t) := \epsilon_{\mathrm{y}} + \epsilon\Lambda_{\mathrm{yy}}(t)$$

, $\varepsilon_y := \delta l_y/L_y$ as the relative variation in the y-direction, the quantity $\Phi_M(0) := AB_0$, the function

$$\Gamma_{33}(t) := (1 - \epsilon_{\mathrm{y}}\vartheta(\epsilon_{\mathrm{y}})) \int d^2\tilde{k}\, \tilde{g}_2^{(1)\prime}(t, \tilde{k}_{\mathrm{x}}, \tilde{k}_{\mathrm{y}})\mathrm{sinc}(\tilde{k}_{\mathrm{x}})\mathrm{sinc}\left(\tilde{k}_{\mathrm{y}}(1 - \epsilon_{\mathrm{y}}\vartheta(\epsilon_{\mathrm{y}}))\right)$$

$$(8)$$

for convenience of presentation. The quantity $\tilde{g}_2^{(1)\prime}\left(t, \tilde{k}_x, \tilde{k}_y\right)$ is defined as a Fourier transform through

$$\tilde{g}_2^{(1)\prime}\left(t, \tilde{k}_x, \tilde{k}_y\right) := \tilde{g}_2^{(1)\prime}\left(t, l_x k_x, l_y k_y\right) = (2\pi)^{-1} \int d\tilde{x}\, d\tilde{y}\, g_2^{(1)\prime}(t, \tilde{x}, \tilde{y})\exp\left[-i\tilde{k}_x\tilde{x}\right]\exp\left[-i\tilde{k}_y\tilde{y}\right]$$ , where

we have $\tilde{x} := x/l_x$ and $\tilde{x} := y/l_y$ and $g_2^{(1)\prime}(t, \tilde{x}, \tilde{y}) := g_2^{(1)}\left(t, \tilde{x}l_x, \tilde{y}l_y\right)$. The (relative) gap $\varepsilon_y$ is an external small parameter that can be freely adjusted as discussed before. We will comment on the possibility of varying $\varepsilon_y$ with respect to $\varepsilon$ later. Here, we have also neglected the second order in $\varepsilon$ error that is made in obtaining $\Phi_M(t)$, which is a well-defined procedure since these corrections will be greatly subdominant (this is particularly true for applications to dynamical gravitational fields which usually are extremely small to first, order, such as gravitational waves [15] or other gravitational perturbations due to Earth-bound masses).

The expressions (7) immediately give us the explicit expression for $J_\Phi(t)$ as

$$J_\Phi(t) = \frac{\epsilon}{L}\left(\dot{\Lambda}_{22}(t)\vartheta\left(\epsilon_{\mathrm{y}} + \epsilon\Lambda_{22}(t)\right) - \dot{\Gamma}_{33}(t)\right)\Phi_{\mathrm{M}}(0),$$

$$(9)$$

which represents the electric field induced in the ring [16]. Here we have discarded the contribution of the time derivative that acts on the theta-function, since it would give us the additional term proportional to $(1 - \varepsilon_y)\varepsilon\dot{\Lambda}_{22}(t)\delta\left(\varepsilon_y + \varepsilon\Lambda_{22}(t)\right)$, where $\delta(x)$ here is the Dirac delta function. Since $\Lambda_{22}(t)$ depends on time, in principle it could be possible that $\varepsilon_y + \varepsilon\Lambda_{22}(t) = 0$ for appropriate times and therefore the Dirac delta diverges. This is an artefact of the fact that we have chosen the theta-function and can be dealt with by modelling properly the functional decay of the magnetic field close to the border. The exact solution is irrelevant for the purposes of this proposal and can be treated as an additional element to be considered in the realistic design. In the following, we will approximate $\Phi_M(0) = AB_0$ since we are working at first order effects and our choice of application allows us to write $(1 - \varepsilon_y)\varepsilon \approx \varepsilon$. This is not necessary always a good approximation. In fact, we could also choose $\varepsilon_y$ to be a significant fraction of unity, that is, to have $\delta l_y$ be a significant fraction of the length $L_y$. If this were the case, we would then keep the expression $\Phi_M(0) = AB_0(1 - \varepsilon_y)$. More on this is described below.

*Induced current*

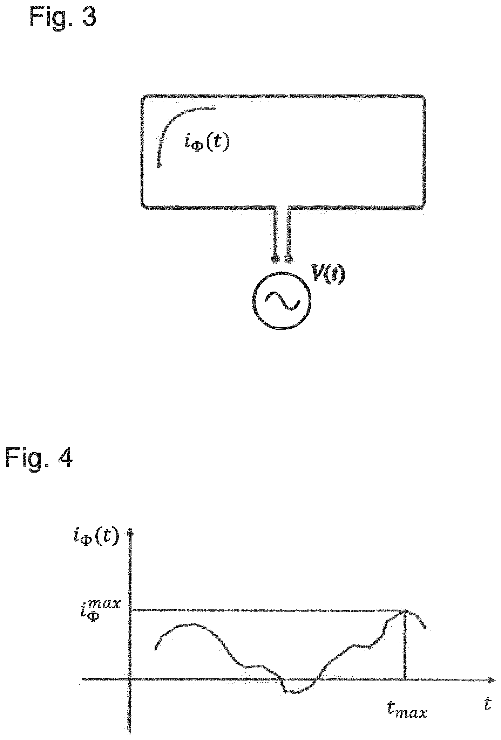

We now proceed to compute the current $i_\Phi$ induced in the wire. The potential $V(\mathbf{x}_Q, \mathbf{x}_P)$ between two points $\mathbf{x}_P$ and $\mathbf{x}_Q$ along the path $\mathbf{x}(\lambda)$ parametrised by $\lambda$ is given by $V\left(\mathbf{x}_Q, \mathbf{x}_P\right) = -\int_{x_P}^{x_Q} d\lambda \dot{\mathbf{x}}(\lambda) \cdot \mathbf{E}(\mathbf{x}(\lambda))$. In our case, we elect to compute the integral along the wire between two points that are sufficiently close such that we can approximate their distance with the perimeter $P_* = 2(L_x + L_y)$, as depicted in Figure 3. Figure 3 shows the extraction of the induced current. This pictorial representation shows that we can extract the current by effectively cutting the wire and inserting two probe wires connected to a detection device that measure the voltage V(t). This is only a representation: different solutions can be adopted.

The potential reads $V_\Phi(t) = P_*J_\Phi(t)$ and the current reads $i_\Phi(t) = J_\Phi(t)/R$ using the well-known law $i = V/R$ that relates current $i$, potential $V$ and resistance R, where the latter is the resistance of the wire between the two points considered. Explicitly we have

$$i_\Phi(t) = \epsilon \frac{\Phi_M(0)}{R} \left[ \dot{\Lambda}_{yy}(t)\, \vartheta\left(\Theta_{yy}(t)\right) + \dot{\Gamma}_{33} \right]$$

$$(10)$$

Here we have not included the time derivatives of the Heaviside theta-function, which would give Dirac-delta functions, as explained above. This can be justified by either assuming that $\varepsilon_y + \varepsilon\Lambda_{22}(t) \geq 0$ for all t, or that the magnetic field cannot vanish abruptly in real implementations, and therefore we would need to replace $\vartheta(x)$ with a steep but continuous function (e.g., $\tanh(\alpha x)$ for an appropriate parameter $\alpha$). Regardless of the concrete approach, we assume that the transient given by this boundary-effect can be dealt with and/or ignored for all purposes.

The expression (10) for the induced current $i_\Phi(t)$ is the main theoretical result of this proposal.

*Induced current in a realistic coil*

Realistic conductors are not infinitesimally thin and have a cross section of size S. Considering this is important for concrete implementations. We can obtain the resistance of the wire using the resistivity p, which provides the resistance per unit length if it is multiplied by S. Thus, we have $\rho := RS/l$ and, in our specific case, we have that $l = P$ (again, P is the perimeter of the coil, i.e., its length). We can also use a coil with N turns whose linear size d is much smaller than the characteristic size $d_0$ of the perturbation, i.e., $d \ll d_0$. In this case, the effective area and the potential between the two electrodes of interest would both increase proportionally to N. Furthermore, the resistance would also increase proportionally to N. Combining all together we obtain

$$i_\Phi(t) = N\epsilon \frac{\Phi_M(0)}{\rho P_*} \left[ \dot{\Lambda}_{yy}(t)\, \vartheta\left(\Theta_{yy}(t)\right) + \dot{\Gamma}_{33} \right]$$

$$(11)$$

This expression allows to evaluate the value of the induced current as a function of the resistivity and the cross-section of the coil.

*Peak current in a realistic coil*

The induced current is time dependent. We wish to evaluate the peak achievable current $i_\Phi^{max}$. We start by optimizing with respect to time, which simply requires to look for the stationary points of the quantity $Q(t) := \dot{\Lambda}_{22}(t)\, \vartheta\,(\varepsilon_y + \varepsilon\Lambda_{22}(t)) + \dot{\Gamma}_{33}$. This is in principle easy to do by solving the equation $0 = \dot{Q}(t) = \ddot{\Lambda}_{22}(t)\, \vartheta\,(\varepsilon_y + \varepsilon\Lambda_{22}(t)) + \ddot{\Gamma}_{33}$ with respect to

time. We thus ignore the problem of the time derivatives of the Heaviside theta-function and obtain the time(s) $t_{max}$ at which the maximum occurs, and consequently $Q(t_{max})$. We can then optimize our quantity further by fixing the length $L \equiv P$ and varying other lengths. In our case, since $P_* = 2(L_x + L_y)$, we can express $L_y$ in terms of $L_x$ and then vary the expression (10) as a function of $L_x$ looking for the maximum, while keeping L constant. Here, we assume that the resistance $R$ is a function of $L$ solely, and therefore constant. It is immediate to see that the maximum of the quantity $\frac{A}{P_*} = \frac{L_x L_y}{2(L_x + L_y)}$ occurs for the square configuration where $L_x = L_y = L/4$. Putting all together, we finally obtain expression for the peak current $i_\Phi^{max}$, which reads

$$i_\Phi^{\max} = \frac{1}{16} N \; \frac{B_0 P_* S}{\rho} Q(t_{\max}) \, \epsilon.$$

(12)

The only remaining nontrivial dependence of this quantity occurs as a function of the shape of the gravitational perturbation encoded in $Q(t_{max})$. We have left this general to highlight the generality of the method described here and we will apply it to a concrete example below. See Figure 4 for a pictorial representation of the induced current as a function of the input perturbation. This figure illustrates the fact that the peak amplitude $i_\Phi^{max}$ can still be time dependent, see (12). This is represented by the fact that the curve has multiple peaks (and valleys). This will occur, in general, if the perturbation $h(t, x, y, z)$ has a complicated time-dependent amplitude.

Recall here that: N is the number of turns, $\varepsilon \ll 1$ is the parameter that drives the strength of the perturbation, $B_0$ is the strength of the magnetic field, S is the cross-section of the conductor, $\rho$ is the resistivity of the coil and $Q(t_{max})$ is the largest value (as a function of time) of the specific driving function.

*Harvesting the current*

Collection of the current does not require a novel device, mechanism or process. Regardless of the particular amount that is induced, the induced current can then be used for any purpose following standard protocols for employing time dependent currents induced in solenoids. For this reason, we do not specify at this stage a particular application, but we mention a few:

- Gradiometry;
- Sensing of dynamical gravitational fields (i.e., gravitational fields that change due to modifications of the state of external sources);
- Fundamental science.

In the following, we provide examples for applications of the results portrayed above. We give three examples: a generic perturbation, the specific case of an impinging gravitational wave, motion sensing. The first can model arbitrary signals (including that of a gravitational wave), while the second implements a specific scenario concretely. Finally, the latter case can be used to sense motion due to the current induced by gravitational fields.

*EXAMPLE 1: Dynamical gravitational perturbations*

We focus on dynamical radiative gravitational perturbations that propagate through spacetime. This implies that the source of the signal is placed (ideally far) away from the coil. Gauge freedom can be used to show that the perturbation $h_{\mu\nu}$ propagates as a superposition of plane waves $e^{ik_\sigma x_\sigma}$ far from the source [13, 14]. We assume to work in the standard transverse-traceless (TT) gauge, which gives us

$$h_{\mu\nu}(x^\sigma) = \Re \int d^3k \, C_{\mu\nu}(\mathbf{k}) e^{ik_\sigma x^\sigma},$$

(13)

where the four momentum vector $k^\sigma$ is defined by $k^\sigma = (k_0, \mathbf{k})$ and satisfies $k_\mu k^\mu = -k_0^2 + |\mathbf{k}|^2 = 0$, the coefficients $C_{\mu\nu}$ ($\mathbf{k}$) depend on the spatial momentum $\mathbf{k}$ and satisfy $C_{00} = 0$, $C_{0j} = 0$, $C := \mathrm{Tr}(C_{ij}) = C^i_i = \mathrm{Tr}(C_{\mu\nu}) = 0$ and $k^\mu C_{\mu\nu}(\mathbf{k}) = 0$.

In this case, we simplify the basic equations of interest since $g_{00} = -1$ identically and $g_{0k} = 0$. This implies that we can foliate spacetime using the timelike Killing vector $\partial_t$, which gives a well-defined notion of time. In particular, this is the time of a background observer to lowest order. It is easy to show that $\det(g_3) = 1 + 2\Re \int d^3k C^j_j(\mathbf{k})e^{k_\sigma x^\sigma} = 1 + O(\varepsilon^2)$, where $g_3$ is the determinant of the spatial part of the metric. We compute $g_2(t, x, y)$ for our choice of surface orientation and we find $\sqrt{g_2(t,x,y)} = 1 - \epsilon \, \Re \int d^3k C_{33}(k)e^{k_\sigma x^\sigma}|_{z=0} + O(\epsilon^2)$. We conclude that the $d\Sigma^j$ can have first order contributions that depend on the component of the metric perturbation that is perpendicular to the surface of integration. This will be true also for more complicated surfaces.

We compute the proper lengths (5) and find

$$L_\mathrm{x}(t) = l_\mathrm{x} \left( 1 + \epsilon \Re \int d^3k \, C_\mathrm{xx}(\mathbf{k}) e^{-i|\mathbf{k}|t} \mathrm{sinc}\left( \frac{k_\mathrm{x} l_\mathrm{x}}{2} \right) \right),$$

$$L_\mathrm{y}(t) = l_\mathrm{y} \left( 1 + \epsilon \Re \int d^3k \, C_\mathrm{yy}(\mathbf{k}) e^{-i|\mathbf{k}|t} \mathrm{sinc}\left( \frac{k_\mathrm{y} l_\mathrm{y}}{2} \right) \right).$$

$$(14)$$

We have already seen that $L_x = l_x(1 + \varepsilon \Lambda_{11}(t))$ and $L_y = l_y(1 + \varepsilon \Lambda_{22}(t))$, where the real and time-dependent functions $\Lambda_{11}(t)$ and $\Lambda_{22}(t)$ can be obtained immediately from the expressions (14) for the present case here.

We can employ the main equations (1), (2) and (6) and obtain the same formal expressions (8), where in this case we need the functions $\Gamma_{33}(t) := (1 - \varepsilon y \vartheta(\epsilon_y))\Re \int d^3k C'_{33}(\mathbf{k})e^{-i|k|t}$ $\Gamma(k_x, k_y)$ and $\Gamma(k_x, k_y) = \mathrm{sinc}\left(\frac{l_x}{2}k_x\right)\mathrm{sinc}\left((1-\epsilon_y\vartheta(\epsilon_y))\frac{l_y}{2}k_y\right)$. Again, we neglect the second order in $\varepsilon$ error that is made in obtaining $\Phi_M(t)$. The expressions (9) immediately give us the explicit expression for $J_\phi(t)$ for this case.

The advantage of this general application is that the weak perturbation induced by any source can be arbitrary. There is no need for a specific positioning of the surface relatively to the propagating perturbation, nor is there a need for a specific functional form of the perturbation. While consideration for realistic implementations will ultimately limit the range of applicability, the techniques do not imply constraints.

*EXAMPLE 2: Gravitational waves*

We now wish to apply our main result to a case of great physical importance. We will specialize our metric perturbation to a passing gravitational wave [13]. This application is of current interest in particular since the recent successful detection of gravitational waves by the LIGO collaboration [5]. We follow standard derivations for the metric perturbation of a gravitational wave [13, 14]. In the TT gauge, the gravitational wave metric (13) reduces to one where $C_{\mu 3} = 0$, the wave has sharp momentum and the only nonzero components arc therefore $h_{xx} = -h_{yy}$ and $h_{xy}$. The diagonal and off-diagonal components are independent and represent two different sets of oscillation degrees of freedom, i.e., two different polarizations of the wave. Here we assume, for the sake of simplicity and without the loss of generality, that $h_{xy} = 0$: thus we have $h_{xx} = -h_{yy} = h_+(t) = \sin(\omega_0(\mathbf{z} - ct))$. The two proper lengths (5) reduce to $L_x = (1 + \varepsilon h_+(t))l_x$ and $L_y = (1 - \varepsilon h_+(t))l_y$. Notice that the (proper) area A satisfies $A = l_x l_y + O(\varepsilon^2)$ as expected for this case, since $C_{33} = 0$ and therefore $\sqrt{g_2(t,x,y)} = O(\epsilon^2)$. The (proper) length of the wire reads $P_* = 2l_x + 2l_y + 2\varepsilon h_+(t)(l_x - l_y)$.

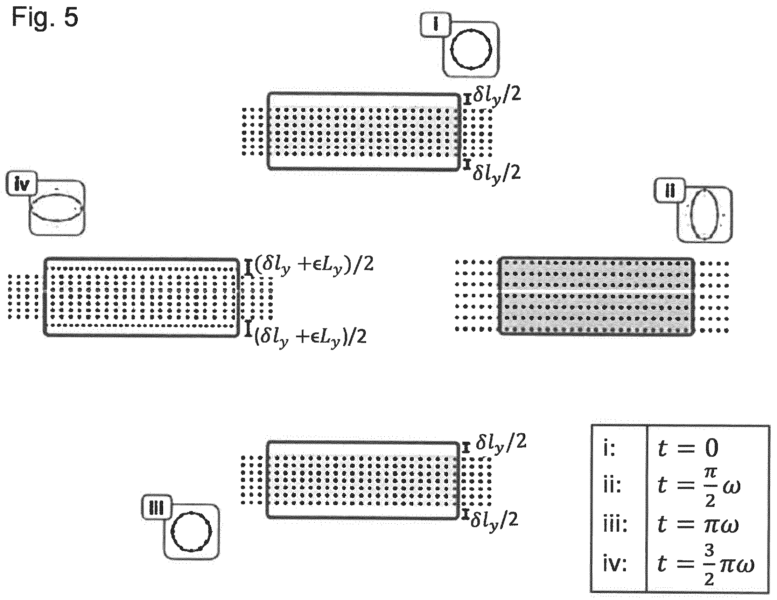

Since we have $h_+(t) = \sin(\omega_0(z - ct))$, it is natural to look at the case where we fix $\delta l_y$ via $\delta l_y/L_y \equiv \varepsilon_y = \varepsilon$. This is equivalent to saying that the vertical gap left in the area occupied by the magnetic field (as generically shown in Figure 2) is exactly equal to the maximum variation of the area itself in that direction. A depiction of the scheme can be found in Figure 5 showing the effect of an impinging gravitational wave. The gravitational wave propagates along the z-direction and impinges on the system (the rectangle single coil for simplicity). The effects of spacetime stretching and compression are negligible on the (infinitely) rigid parts of the coil, while they effectively diminish the flux of the magnetic field because of gain or loss of field lines in the x-direction. This occurs because of the deformation of the space(time) determined by the coil. The figure gives a schematic representation of the ideal cycle involving the passing of a gravitational wave: at time t = 0 we assume that the wave has no effects. At time $t = (\pi/2)\omega$ the wave maximally stretches the y-direction and compresses the x-direction. At time $t = \pi\omega$ the wave brings back the configuration to that of the initial time. At time $t = (3\pi/2)\omega$ the wave maximally stretches the x-direction and compresses the y-direction. The situation repeats starting at each $t = 2n\pi$, with $n$ a positive integer.

The magnetic flux $\Phi_M(t)$ reduces for this application to

$$\Phi_{\mathrm{M}}(t) = \Phi_{\mathrm{M}}(0)\left[1 + \epsilon h_+(t)\,\vartheta\left(\epsilon_y - \epsilon h_+(t)\right)\right] = (1 + h_+(t)\epsilon)\Phi_{\mathrm{M}}(0), \quad (15)$$

which immediately gives us the main expression (10) for the current case. We find

$$i_\Phi(t) = -\dot{h}_+(t)\,\frac{\Phi_{\mathrm{M}}(0)}{R}\,\epsilon,$$

$$(16)$$

We also compute the (magnitude of the) peak current $i_\Phi^{max}$ for this case by employing $h_+(t) = \sin(\omega_0(z - ct))$, and we therefore obtain

$$i_\Phi^{\max} = \frac{N}{16}\frac{\omega_0 B_0 P_* S}{\rho}\,\epsilon.$$

$$(17)$$

This result tells us that, in order to amplify the peak current $i_\Phi^{max}$ induced by a gravitational wave, we have to increase the background magnetic field, the number of turns, the section of the wire and use materials with lower resistivity. Higher frequency and stronger gravitational waves will also amplify the peak current.

*EXAMPLE 3: Motion of the coil*

In the last example, we change the perspective and assume that the background gravitational field is static. This can be a good approximation for particular setups where measurements are done very fast compared to the dynamics of the background gravitational field. The prototypical example is that of measuring the gravitational field of the Earth at a location.

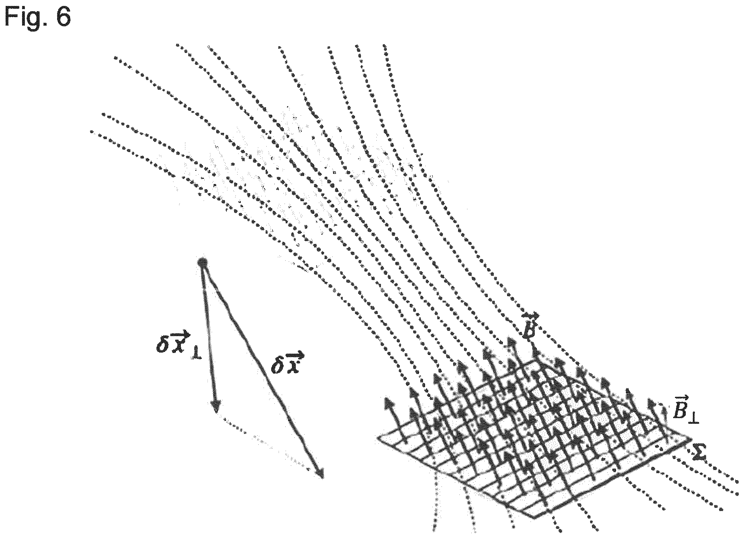

Let us assume that the flat rectangular coil is positioned perpendicular to the z-axis and can move in an arbitrary direction. For the sake of the example, the coil is static for $t < 0$ and begins moving at $t = 0$. It follows from (9) that the flux $\Phi_M(t)$ is constant up to $t = 0$ and therefore the induced electric field $J_\phi(t)$ vanishes. No current will be induced in the coil. Nevertheless, once the coil begins moving, the quantities $\Lambda_{11}$, $\Lambda_{22}$ and $\Gamma_{33}$ will effectively become time dependent. This occurs because, while it is true that these quantities are time independent since the gravitational field is static, they are obtained at the particular hypersurface which defined the coil. If the coil changes of altitude (in general, position) as a function of time, inevitably these quantities need to be calculated at the new hypersurface and will become effectively functions of time. The only situation where the flux $\Phi_M(t)$ might not change is when the coils somehow follow a motion that "compensates" for the gradient of the field. For example, if the field is homogeneous, it is sufficient that the coil travels at a constant velocity without rotations. A generic illustration of the process can be found in Figure 6 showing the motion of the coil in a static gravitational field. It is a pictorial and purely illustrative representation of the case where the gravitational potential (dotted lines pictorially indicate gravitational iso-potential) can be position-dependent and is static, while the coil moves by a (small) distance $\delta\vec{x} \equiv \delta\mathbf{x} = \mathbf{v}dt$ in a time $dt$. Here we choose to label vectors with overhead arrows instead of using bold font for sake of readability. The initial coil surface $\Sigma_0$ has therefore been displaced to $\Sigma$ and the magnetic flux is therefore effectively time-dependent as demonstrated in the text. For convenience it has been chosen rectangular and flat, and the magnetic field homogeneous pointing in one direction. The methods provided here can be extended immediately to arbitrary surfaces and arbitrary spatial-dependence designs of the magnetic field.

In general, however, the flux of the magnetic field will change because of the effective changes in the quantities $\Lambda_{11}$, $\Lambda_{22}$ and $\Gamma_{33}$. Let us proceed and see how this can happen. We can assume for simplicity that the metric is effectively constant in the x - y-directions, and therefore $h_{11}$, $h_{12}$ and $h_{22}$ are constant throughout the motion, which implies $\Lambda_{11}$ and $\Lambda_{22}$ are constant as well.

We can move on to compute $g_2$ at any particular time $t$. Fixing the surface to be $z = z_0 = 0$ initially we obtain $g_2(x, y, z)$ at a particular time t. We can now compute $g_2(x, y, z)$ to first order in the displacement $\delta z(t)$ at a surface $z(t) = z_0 + \dot{z}(t)\delta t = \dot{z}(t)dt + O(\delta z^2)$, where $\delta z(t) = \dot{z}(t)dt$ and $v \equiv \dot{z}(t) = dz/dt$. In order for the approximation to be valid, we require $v\delta t \ll 1$. Thus, we can write $g_2(x, y, z) = g_2(x, y) + \partial_z g_2(x, y, z)|_{z=0}\delta z$ since the variation occurs in the z-direction, and we therefore have

$$\sqrt{g_2(x,y,z)} = \sqrt{g_2(x,y,0)} \left( 1 + \frac{1}{2g_2(x,y,0)} \partial_z g_2(x,y,z)|_{z=0} \dot{z}dt \right).$$

$$(18)$$

Note that here we have defined $\partial_z := \partial/\partial_z$. In the previous text we had conveniently called $g_2(x, y) = g_2(x, y, 0)$. We can choose the motion of the coil (surface) to enhance or decrease the final effect. For example, we can have:

- $\delta z(t) = vt$ for a given velocity parameter v = z;
- $\delta z(t) = \frac{1}{2}at^2$ for a given acceleration parameter a. Here the velocity is therefore $v \equiv \dot{z}(t) = at$;
- $\delta z(t) = \Delta z \cos(\omega t)$ for given amplitude $\Delta z$ and frequency $\omega$ parameters. Here the acceleration is $a(t) \equiv \ddot{z}(t) = -\Delta z\omega^2 \cos(\omega t)$ while the velocity is $v \equiv \dot{z}(t) = -\Delta z\omega \sin(\omega t)$.

Having assumed that the metric is (effectively) constant in the x - y-sector, it follows that the only dependence on time (for small deviations of the coil from the initial position) comes only through the $\Gamma_{33}$ term in (9). The result that follows is a direct repetition of the computations above applied to this case.

Note that, in general, changes of $\sqrt{g_2(x, y, z)}$ due to infinitesimal deviation $\delta\mathbf{x} = (d\mathbf{x}/dt)dt = \mathbf{v}dt$ in an arbitrary direction can be implemented by

$$\sqrt{g_2(x,y,z)} = \sqrt{g_2(x,y,z)|_{\Sigma_0}} \left( 1 + \frac{1}{2g_2(x,y,z)|_{\Sigma_0}} \nabla g_2(x,y,z)|_{\Sigma_0} \cdot v\,dt \right),$$

$$(19)$$

where $\Sigma_0$ defines the initial surface where the coil lies and $V := (\partial_x, \partial_y, \partial_z)$ is the gradient. One can then chose a particular time dependence $\delta\mathbf{x}(t) = \mathbf{v}dt$ for the small deviation and obtain, at least in the vicinity of the initial location, a dependence on time. In this case, one would also need to update the functions $\Lambda_{11}(t)$ and $\Lambda(22)$ that determine the relation between the proper length and the coordinate distances of the edges. This can be easily done but explicit expressions are not necessary at this point. Numerical integration is necessary in order to obtain $\sqrt{g_2(x, y, z)}$, $\Lambda_{11}(t)$ and $\Lambda_{22}$ given an arbitrary motion at an arbitrary distance from the initial location of the coil. It is clear that the motion of the coil picks up an effect when $\nabla g_2(x, y, z)|_{\Sigma_0} \cdot \mathbf{v} \neq 0$. If this is the case, then one needs to look at the effects induced by the changes in the linear dimensions of the coil as well, that is, the functions $\Lambda_{11}$ and $\Lambda_{22}$.

These formulas can then be used in conjunction with (10) to obtain

$$i_\Phi(t) = \epsilon \frac{AB_0}{R} \left[ \dot{\Lambda}_{22}(t)\vartheta(\epsilon_y + \epsilon\Lambda_{22}(t)) + \dot{\Gamma}_{33} \right],$$

(20)

where $\Gamma_{33}$ is defined through (8) with $\sqrt{g_2(x,y,z)}$ that reads (19).

**REFERENCES**

[1] A. V. Veryaskin, in Gravity, Magnetic and Electromagnetic Gradiometry, 2053-2571 (Morgan & Claypool Publishers, 2018) pp. 1-1 to 1-56.

[2] O. Carraz, C. Siemes, L. Massotti, R. Haagmans, and P. Silvestrin, Microgravity Science and Technology 26, 139 (2014).

[3] C. E. Griggs, M. V. Moody, R. S. Norton, H. J. Palk, and K. Venkateswara, Phys. Rev. Applied 8, 064024 (2017).

[4] B. P. Abbott et al., Reports on Progress in Physics 72, 076901 (2009).

[5] B. P. Abbott et al. (LIGO Scientific Collaboration and Virgo Collaboration), Phys. Rev. Lett. 116, 061102 (2016).

[6] B. P. Abbott et al., Living Reviews in Relativity 23, 3 (2020).

[7] M. I. Evstifeev, Gyroscopy and Navigation 8, 68 (2017).

[8] M. J. Snadden, J. M. McGuirk, P. Bouyer, K. G. Haritos, and M. A. Kasevich, Phys. Rev. Lett. 81, 971 (1998).

[9] B. Stray, A. Lamb, A. Kaushik, J. Vovrosh, A. Rodgers, J. Winch, F. Hayati, D. Boddice, A. Stabrawa, A. Niggebaum, M. Langlois, Y.-H. Lien, S. Lellouch, S. Roshanmanesh, K. Ridley, G. de Villiers, G. Brown, T. Cross, G. Tuckwell, A. Faramarzi, N. Metje, K. Bongs, and M. Holynski, Nature 602, 590 (2022).

[10] Y. Bidel, N. Zahzam, A. Bresson, C. Blanchard, A. Bonnin, J. Bernard, M. Cadoret, T. E. Jensen, R. Forsberg, C. Salaun, S. Lucas, M. F. Lequentrec-Lalancette, D. Rouxel, G. Gabalda, L. Seoane, D. T. Vu, and S. Bonvalot, Airborne absolute gravimetry with a quantum sensor, comparison with classical technologies (2022).

[11] P. Amaro-Seoane, S. Aoudia, S. Babak, P. Binétruy, E. Berti, A. Bohé, C. Caprini, M. Colpi, N. J. Cornish, K. Danzmann, J.-F. Dufaux, J. Gair, O. Jennrich, P. Jetzer, A. Klein, R. N. Lang, A. Lobo, T. Littenberg, S. T. McWilliams, G. Nelemans, A. Petiteau, E. K. Porter, B. F. Schutz, A. Sesana, R. Stebbins, T. Sumner, M. Vallisneri, S. Vitale, M. Volonteri, and H. Ward, elisa: Astrophysics and cosmology in the millihertz regime (2012).

[12] T. Bravo, D. Rätzel, and I. Fuentes, Gravitational time dilation in extended quantum systems: the case of light clocks in Schwarzschild spacetime (2022).

[13] C. W. Misner, K. S. Thorne, and J. A. Wheeler, Gravitation (Freeman & Co., 1973).

[14] S. M. Carroll, Spacetime and Geometry: An. Introduction to General Relativity (Cambridge University Press, 2019).

[15] B. S. Sathyaprakash and B. F. Schutz, Living Reviews in Relativity 12 (2009).

[16] F. Cabral and F. S. N. Lobo, Foundations of Physics 47, 208 (2017).

**Claims**

1. Method of detecting a dynamical change of a gravitational field, the method comprising the steps of:

   providing a predefined magnetic field ($\vec{B}$);
   providing an electrical conductor loop ($x_l$, $x_r$; $y_d$, $y_u$) so as to encircle a two-dimensional surface area ($\Sigma$) with the magnetic field ($\vec{B}$) passing therethrough;
   detecting an electrical signal ($i_\phi(t)$) induced in the loop in response to a dynamical dimensional change of the surface area ($\Sigma$) caused by a dynamical change of the gravitational field.

2. Method according to claim 1, wherein the magnetic field ($\vec{B}$) passing through the loop is confined to a portion of the two-dimensional surface area so as to define a field-free gap ($\delta$ly) between the boundaries of the two-dimensional surface area ($\Sigma$) and the portion having the field confined thereto, respectively.

3. Method according to anyone of the preceding claims, wherein the loop is of rectangular shape.

4. Method according to claims 2 and 3, wherein the field-free gap ($\delta$ly) is in the form of two rectangular zones, each of the zones sharing one side edge with one of two parallel side edges of the rectangular loop.

5. Method according to anyone of the preceding claims, wherein the magnetic field ($\vec{B}$) is static.

6. Method according to anyone of the preceding claims, further comprising the step of moving the loop ($x_l$, $x_r$; $y_d$, $y_u$).

7. Method according to anyone of the preceding claims, further comprising the step of establishing a mathematical expression for the induced electrical signal ($i\phi$(t)) by relating the dynamical change of the two-dimensional surface area ($\Sigma$) to the corresponding dynamical change of the metric tensor of the gravitational field according to gravitational theory, and by relating the induced electrical signal to the dynamical change of magnetic flux through the two-dimensional area caused by the dynamical change of the two-dimensional surface area ($\Sigma$) according to Maxwell's theory of electromagnetism.

8. Apparatus for detecting a dynamical change of a gravitational field, the apparatus comprising:

   means for providing a predefined magnetic field ($\vec{B}$);
   an electrical conductor loop ($x_l$, $x_r$, $y_d$, $y_u$) arranged to encircle a two-dimensional surface area ($\Sigma$) with the magnetic field passing therethrough;
   means for detecting an electrical signal ($i\phi$(t)) induced in the loop in response to a dynamical change of the two-dimensional surface area ($\Sigma$) caused by a dynamical change of the gravitational field.

9. Apparatus according to claim 8, wherein the magnetic ($\vec{B}$) field passing through the loop ($x_l$, $x_r$; $y_d$, $y_u$) is confined to a portion of the two-dimensional surface area ($\Sigma$) so as to define a field-free gap ($\delta$ly) between the boundaries of the two-dimensional surface area ($\Sigma$) and the portion having the field confined thereto, respectively.

10. Apparatus according to anyone of claims 8 and 9, wherein the loop is of rectangular shape.

11. Apparatus according to claims 9 and 10, wherein the field-free gap ($\delta$ly) is in the form of two rectangular zones, each of the zones sharing one side edge with each one of two parallel side edges of the rectangular loop ($x_l$, $x_r$; $y_d$, $y_u$).

12. Apparatus according to anyone of the preceding claims, wherein the magnetic field ($\vec{B}$) is static.

13. Apparatus according to anyone of the preceding claims, wherein the conductor loop ($x_l$, $x_r$; $y_d$, $y_u$) is in the form of a coil having one or more turns of an electrically conductive wire.

14. Apparatus according to anyone of the preceding claims, wherein the loop ($x_l$, $x_r$; $y_d$, $y_u$) has a structural stiffness so as to resist deformation by tidal forces of the gravitational field.


**Patentansprüche**

1. Verfahren zum Erfassen einer dynamischen Änderung eines Gravitationsfeldes, wobei das Verfahren die folgenden Schritte umfasst:

   Bereitstellen eines vordefinierten Magnetfeldes ($\vec{B}$);
   Bereitstellen einer elektrischen Leiterschleife ($x_l$, $x_r$; $y_d$, $y_u$), so dass sie einen zweidimensionalen Oberflächen-bereich ($\Sigma$) umgibt, wobei das Magnetfeld ($\vec{B}$) dort hindurchgeht;
   Erfassen eines in der Schleife induzierten elektrischen Signals ($i\Phi$(t)) als Reaktion auf eine dynamische Dimensionsänderung des Oberflächenbereichs ($\Sigma$), die durch eine dynamische Änderung des Gravitationsfeldes verursacht wird.

2. Verfahren nach Anspruch 1, wobei das durch die Schleife hindurchgehende Magnetfeld ($\vec{B}$) auf einen Abschnitt des zweidimensionalen Oberflächenbereichs begrenzt ist, so dass es einen feldfreien Spalt ($\delta$ly) zwischen den jeweiligen Begrenzungen des zweidimensionalen Oberflächenbereichs ($\Sigma$) und dem Abschnitt, auf den das Feld begrenzt ist, definiert.

3. Verfahren nach einem der vorhergehenden Ansprüche, wobei die Schleife eine rechteckige Form aufweist.

4. Verfahren nach den Ansprüchen 2 und 3, wobei der feldfreie Spalt ($\delta$ly) in Form von zwei rechteckigen Zonen gebildet wird, wobei jede der Zonen eine Seitenkante mit einer der beiden parallelen Seitenkanten der rechteckigen Schleife gemeinsam nutzt.

5. Verfahren nach einem der vorhergehenden Ansprüche, wobei das Magnetfeld ($\vec{B}$) statisch ist.

6. Verfahren nach einem der vorhergehenden Ansprüche, das ferner den Schritt des Bewegens der Schleife ($x_l$, $x_r$; $y_d$, $y_u$) umfasst.

7. Verfahren nach einem der vorhergehenden Ansprüche, ferner umfassend den Schritt des Aufstellens eines mathematischen Ausdrucks für das induzierte elektrische Signal (i$\Phi$(t)), indem die dynamische Änderung des zweidimensionalen Oberflächenbereichs ($\Sigma$) mit der entsprechenden dynamischen Änderung des metrischen Tensors des Gravitationsfeldes gemäß der Gravitationstheorie in Beziehung gesetzt wird, und indem das induzierte elektrische Signal mit der dynamischen Änderung des magnetischen Flusses durch den zweidimensionalen Bereich, die durch die dynamische Änderung des zweidimensionalen Oberflächenbereichs ($\Sigma$) gemäß der Maxwell'schen Theorie des Elektromagnetismus verursacht wird, in Beziehung gesetzt wird.

8. Vorrichtung zum Erfassen einer dynamischen Änderung eines Gravitationsfeldes, wobei die Vorrichtung Folgendes umfasst:

   Mittel zum Bereitstellen eines vordefinierten Magnetfeldes ($\vec{B}$);
   eine elektrische Leiterschleife ($x_l$, $x_r$; $y_d$, $y_u$), die so angeordnet ist, dass sie einen zweidimensionalen Oberflächenbereich ($\Sigma$) umgibt, wobei das Magnetfeld dort hindurchgeht;
   Mittel zum Erfassen eines in der Schleife induzierten elektrischen Signals (i$\Phi$(t)) als Reaktion auf eine dynamische Änderung des zweidimensionalen Oberflächenbereichs ($\Sigma$), die durch eine dynamische Änderung des Gravitationsfeldes verursacht wird.

9. Vorrichtung nach Anspruch 8, wobei das durch die Schleife ($x_l$, $x_r$; $y_d$, $y_u$) hindurchgehende Magnetfeld ($\vec{B}$) auf einen Abschnitt des zweidimensionalen Oberflächenbereichs ($\Sigma$) begrenzt ist, so dass es einen feldfreien Spalt ($\delta$ly) zwischen den jeweiligen Begrenzungen des zweidimensionalen Oberflächenbereichs ($\Sigma$) und dem Abschnitt, auf den das Feld begrenzt ist, definiert.

10. Vorrichtung nach einem der Ansprüche 8 und 9, wobei die Schleife eine rechteckige Form aufweist.

11. Vorrichtung nach den Ansprüchen 9 und 10, wobei der feldfreie Spalt ($\delta$ly) in Form von zwei rechteckigen Zonen gebildet wird, wobei jede der Zonen jeweils eine Seitenkante mit einer der beiden parallelen Seitenkanten der rechteckigen Schleife ($x_l$, $x_r$; $y_d$, $y_u$) gemeinsam nutzt.

12. Vorrichtung nach einem der vorhergehenden Ansprüche, wobei das Magnetfeld ($\vec{B}$) statisch ist.

13. Vorrichtung nach einem der vorhergehenden Ansprüche, wobei die Leiterschleife ($x_l$, $x_r$; $y_d$, $y_u$) in Form einer Spule mit einer oder mehreren Windungen eines elektrisch leitenden Drahtes gebildet ist.

14. Vorrichtung nach einem der vorhergehenden Ansprüche, wobei die Schleife ($x_l$, $x_r$; $y_d$, $y_u$) eine strukturelle Steifigkeit aufweist, so dass sie einer Verformung durch Gezeitenkräfte des Gravitationsfeldes widersteht.

**Revendications**

1. Procédé de détection d'une variation dynamique d'un champ gravitationnel, le procédé comprenant les étapes suivantes consistant à :

   fournir un champ magnétique ($\vec{B}$) prédéfini,
   fournir une boucle de conducteur électrique ($x_l$, $x_r$ ; $y_d$, $y_u$) de façon qu'elle encercle une surface bidimensionnelle ($\Sigma$) traversée par ledit champ magnétique ($\vec{B}$),
   détecter un signal électrique (i$\Phi$(t)) induit dans la boucle en réaction à une variation dimensionnelle dynamique de

la surface ($\Sigma$) causée par une variation dynamique du champ gravitationnel.

2. Procédé selon la revendication 1, dans lequel le champ magnétique ($\vec{B}$) traversant la boucle est confiné à une partie de la surface bidimensionnelle de façon à définir un interstice sans champ ($\delta$ly) entre les bordures respectives de la surface bidimensionnelle ($\Sigma$) et la partie à laquelle le champ est confiné.

3. Procédé selon l'une quelconque des revendications précédentes, dans lequel la boucle est de forme rectangulaire.

4. Procédé selon les revendications 2 et 3, dans lequel l'interstice sans champ ($\delta$ly) est sous la forme de deux zones rectangulaires, chacune des zones partageant un bord latéral avec l'un des deux bords latéraux parallèles de la boucle rectangulaire.

5. Procédé selon l'une quelconque des revendications précédentes, dans lequel le champ magnétique ($\vec{B}$) est statique.

6. Procédé selon l'une quelconque des revendications précédentes, comprenant en outre l'étape consistant à déplacer la boucle ($x_l$, $x_r$ ; $y_d$, $y_u$).

7. Procédé selon l'une quelconque des revendications précédentes, comprenant en outre l'étape consistant à établir une expression mathématique pour le signal électrique induit (i$\Phi$(t)) en liant la variation dynamique de la surface bidimensionnelle ($\Sigma$) à la variation dynamique correspondante du tenseur métrique du champ gravitationnel selon la théorie gravitationnelle, et en liant le signal électrique induit à la variation dynamique du flux magnétique traversant la surface bidimensionnelle causée par la variation dynamique de la surface bidimensionnelle ($\Sigma$) selon la théorie de l'électromagnétisme de Maxwell.

8. Dispositif de détection d'une variation dynamique d'un champ gravitationnel, ledit dispositif comprenant :

un moyen de fourniture d'un champ magnétique prédéfini ($\overline{B}$),
une boucle de conducteur électrique ($x_l$, $x_r$ ; $y_d$, $y_u$) disposée pour encercler une surface bidimensionnelle ($\Sigma$) traversée par ledit champ magnétique,
un moyen de détection d'un signal électrique (i$\Phi$(t)) induit dans la boucle en réaction à une variation dynamique de la surface bidimensionnelle ($\Sigma$) causée par une variation dynamique du champ gravitationnel.

9. Dispositif selon la revendication 8, dans lequel le champ magnétique ($\vec{B}$) traversant la boucle ($x_l$, $x_r$ ; $y_d$, $y_u$) est confiné à une partie de la surface bidimensionnelle ($\Sigma$) de façon à définir un interstice sans champ ($\delta$ly) entre les bordures respectives de la surface bidimensionnelle ($\Sigma$) et la partie à laquelle le champ est confiné.

10. Dispositif selon l'une quelconque des revendications 8 et 9, dans lequel la boucle est de forme rectangulaire.

11. Dispositif selon les revendications 9 et 10, dans lequel l'interstice sans champ ($\delta$ly) est sous la forme de deux zones rectangulaires, chacune des zones partageant un bord latéral avec un des deux bords latéraux parallèles de la boucle rectangulaire ($x_l$, $x_r$ ; $y_d$, $y_u$).

12. Dispositif selon l'une quelconque des revendications précédentes, dans lequel le champ magnétique ($\vec{B}$) est statique.

13. Dispositif selon l'une quelconque des revendications précédentes, dans lequel la boucle conductrice ($x_l$, $x_r$ ; $y_d$, $y_u$) est sous la forme d'une bobine comportant une ou plusieurs spires d'un fil électriquement conducteur.

14. Dispositif selon l'une quelconque des revendications précédentes, dans lequel la boucle ($x_l$, $x_r$ ; $y_d$, $y_u$) peut avoir une rigidité structurelle lui permettant de résister à la déformation causée par les forces de marée du champ gravitationnel.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ANANDAN et al.** Detection of gravitational radiation using superconducting circuits. *Physics Letters A*, vol. 110 (9), 446-450
- **GULIAN ARMEN et al.** Rotational Superconducting Gravitational Wave Detectors Based on Cooper-Pair Electronic Transducers. *IEEE Transactions on Applied Superconductivity*, vol. 29 (5), 1-5
- **CHIAO et al.** *arXiv:1011.1325v1*, 05 November 2010
- **A. V. VERYASKIN**. Gravity, Magnetic and Electromagnetic Gradiometry. Morgan & Claypool Publishers, 2018, vol. 2053-2571, 1-1, 1-56
- **O. CARRAZ ; C. SIEMES ; L. MASSOTTI ; R. HAAGMANS ; P. SILVESTRIN**. *Microgravity Science and Technology*, 2014, vol. 26, 139
- **C. E. GRIGGS ; M. V. MOODY ; R. S. NORTON ; H. J. PALK ; K. VENKATESWARA**. *Phys. Rev. Applied*, 2017, vol. 8, 064024
- **B. P. ABBOTT et al.** *Reports on Progress in Physics*, 2009, vol. 72, 076901
- **B. P. ABBOTT et al.** LIGO Scientific Collaboration and Virgo Collaboration. *Phys. Rev. Lett.*, 2016, vol. 116, 061102
- **B. P. ABBOTT et al.** *Living Reviews in Relativity*, 2020, vol. 23, 3
- **M. I. EVSTIFEEV**. *Gyroscopy and Navigation*, 2017, vol. 8, 68
- **M. J. SNADDEN ; J. M. MCGUIRK ; P. BOUYER ; K. G. HARITOS ; M. A. KASEVICH**. *Phys. Rev. Lett.*, 1998, vol. 81, 971
- **B. STRAY ; A. LAMB ; A. KAUSHIK ; J. VOVROSH ; A. RODGERS ; J. WINCH ; F. HAYATI ; D. BODDICE ; A. STABRAWA ; A. NIGGEBAUM**. *Nature*, 2022, vol. 602, 590
- **Y. BIDEL ; N. ZAHZAM ; A. BRESSON ; C. BLANCHARD ; A. BONNIN ; J. BERNARD ; M. CADORET ; T. E. JENSEN ; R. FORSBERG ; C. SALAUN**. *Airborne absolute gravimetry with a quantum sensor, comparison with classical technologies*, 2022
- **P. AMARO-SEOANE ; S. AOUDIA ; S. BABAK ; P. BINÉTRUY ; E. BERTI ; A. BOHÉ ; C. CAPRINI ; M. COLPI ; N. J. CORNISH ; K. DANZMANN**. *Astrophysics and cosmology in the millihertz regime*, 2012
- **T. BRAVO ; D. RÄTZEL ; I. FUENTES**. *Gravitational time dilation in extended quantum systems: the case of light clocks in Schwarzschild spacetime*, 2022
- **C. W. MISNER ; K. S. THORNE ; J. A. WHEELER**. Gravitation. Freeman & Co., 1973
- **S. M. CARROLL**. Spacetime and Geometry: An. Introduction to General Relativity. Cambridge University Press, 2019
- **B. S. SATHYAPRAKASH ; B. F. SCHUTZ**. *Living Reviews in Relativity*, 2009, vol. 12
- **F. CABRAL ; F. S. N. LOBO**. *Foundations of Physics*, 2017, vol. 47, 208